# EUROPEAN PATENT APPLICATION

(11) **EP 2 116 442 A1**
(43) Date of publication of application: **11.11.2009**
(21) Application number: 09005893.4
(22) Date of filing: 28.04.2009
(51) Int. Cl.: B62B 3/06, B66F 9/075

(54) **Fork assembly lift mechanism**

(30) Priority: 07.05.2008 US 116273
(71) Applicant: THE RAYMOND CORPORATION, Greene, New York 13778 (US)
(72) Inventor: Gramatikov, Ivan, Kirilov, Vestal, New York 13850 (US)
(74) Representative: advotec.

(57) **Abstract**

A fork assembly lift mechanism (24) is disclosed that is configurable for use in a material handling vehicle (10) for moving a fork assembly (14), including a fork trail assembly (66), between a lowered position and a raised position. The fork assembly lift mechanism comprises a master cylinder (52a,52b) coupled to a truck body (12) and the fork assembly (14) for moving the fork assembly (14) between the lowered position and the raised position, and a slave cylinder (64a,64b) coupled to the fork assembly and the fork trail assembly (66) for moving the fork trail assembly (66) between the retracted position and the extended position. The slave cylinder (64a,64b) is in fluid communication with the master cylinder (52a,52b) such that actuation of the master cylinder results in actuation of the slave cylinder to move the fork assembly (14) between the lowered position and the raised position, and to move the fork trail assembly (24) between the retracted position and the extended position.

## Description

### CROSS REFERENCES TO RELATED APPLICATIONS

Not Applicable

### STATEMENT REGARDING FEDERALLY SPONSORED RESEARCH

Not Applicable.

### BACKGROUND OF THE INVENTION

The present invention relates to material handling vehicles, and more particularly to a mechanism for raising and lowering the forks attached to a material handling vehicle.

Material handling vehicles, such as pallet trucks, typically include a wheeled tractor to which a fork assembly is mounted. The fork assembly includes a pair of load supporting forks configured for vertical movement between lowered and raised positions. Each fork is typically an elongated U-shaped structure having a pair of reinforced opposing walls that define a space in which a fork trail assembly is housed. The fork trail assembly is fixed to each fork proximal a fork distal end, and selectively extends and retracts to raise and lower the fork distal end.

Each fork trail assembly typically includes a pivot arm that is pivotally coupled to a pivot shaft fixed to the fork, and a ground engaging wheel that is rotatably mounted to the pivot arm. The pivot arm is pivoted to maintain contact of the ground engaging wheel with a support surface (e.g., a factory floor) as the fork is raised and lowered to support the distal end of the fork. The pivot arm is pivoted by a pull rod, or other link member, housed in the fork that has one end pivotally fixed to the pivot arm and an opposing end pivotally linked to a bell crank proximate the tractor. The bell crank is linked to the tractor and pivots as the fork assembly moves between the raised and lowered positions to exert a force on the pull rod, ultimately pivoting the pivot arm and causing the ground engaging wheel to extend or retract.

A lift system drives the raising and lowering of the entire fork assembly, including the extension and retraction of the fork trail assembly. One lift system commonly used for raising and lowering the fork assembly incorporates a hydraulic cylinder coupled to both the tractor and the fork. As the hydraulic cylinder extends and retracts, it raises and lowers the proximal end of the fork and simultaneously causes the coupled bell crank to rotate. The rotation of the bell crank in turn translates the pull rod housed within the fork. The pivot arm attached to the other end of the pull rod is pivoted by the translation of the pull rod, ultimately extending and retracting the fork trail assembly and causing the distal end of the fork to raise and lower. An essentially identical system is used to raise and lower the other fork. Thus, this common lift system incorporates both a hydraulic cylinder and a mechanical linkage to raise and lower the entire fork attachment assembly.

The above fork assembly is adequate for relatively short forks (e.g., one to two pallet forks); however, as the length of the forks increase upwards of two hundred inches and greater, thereby accommodating an increasing number of pallets (e.g., three, four, or more), the drawbacks of the above assembly become more pronounced. First, to reduce the amount of fork deflection, the fork must be structurally reinforced and thickened, adding a significant amount of weight to the fork. Second, a longer fork requires a longer and more robust pull rod or link member, again adding a significant amount of weight and cost to the overall fork assembly.

The addition of weight to the fork assembly decreases the maximum payload capacity of the material handling vehicle and increases the wear and tear on the bearings, bushings, wheels, and many other consumable components of the material handling vehicle.

Present fork assemblies require a significant amount of space to accommodate the link member (e.g., pull rod). As the length of the fork increases, a larger pull rod is required to minimize deflection and ensure proper operation. The larger pull rod weighs more and requires a larger cavity inside the fork. Moreover, as mentioned, a longer fork requires a reinforced structure and may require secondary machining operations to maintain the required levelness of the forks for proper operation.

A further aspect of common pull rods, or link members, is that each includes a bent section proximal the tractor to aid the operation and adjustment of the pull rod; this bent section requires additional space within the fork. Consequently, when a battery is used, the battery assembly is raised above the forks to allow room for a larger cavity to accommodate the bent section of the pull rod. This has the practical effect of elevating the center of gravity of the material handling vehicle.

Therefore, a need exists for a fork assembly lift mechanism that is relatively compact, scaleable, efficiently manufactured, and non-intrusive, even in applications requiring forks in excess of two hundred inches in length.

### SUMMARY OF THE INVENTION

The present invention generally provides a hydraulic fork assembly lift mechanism for use in a material handling vehicle that eliminates the typical mechanical link (e.g., a pull rod) required to actuate the fork trail assembly. As a result, fork assemblies can be made longer, more capable, and more economical than previous designs.

In one aspect, the present invention provides a fork assembly lift mechanism configurable for use in a material handling vehicle having a truck body and a fork assembly. The fork assembly is coupled to the truck body and is moveable between a lowered position and a raised position. The fork assembly includes a fork trail assembly that is movable between a retracted position and an extended position. The fork assembly lift mechanism includes a master cylinder that is coupled to the truck body and the fork assembly for moving the fork assembly between the lowered position and the raised position. A slave cylinder is coupled to the fork assembly and the fork trail assembly for moving the fork trail assembly between the retracted position and the extended position. The slave cylinder is in fluid communication with the master cylinder so that actuation of the master cylinder results in actuation of the slave cylinder to move the fork assembly between the lowered position and the raised position, and to move the fork trail assembly between the retracted position and the extended position.

In another aspect, the present invention provides a material handling vehicle comprising a tractor capable of supplying a pressurized fluid. A fork assembly is coupled to the tractor and is moveable between a first position and a second position. A first fork is included in the fork assembly and has a distal fork end opposite a proximal fork end near the tractor. A fork trail assembly is proximate the distal fork end of the first fork. A first master cylinder is coupled to the tractor and the fork assembly, and is in selective communication with the pressurized fluid. A first slave cylinder is coupled to the first fork and the fork trail assembly. The first master cylinder and the first slave cylinder are in fluid communication such that actuation of the first master cylinder by the pressurized fluid actuates the first slave cylinder to move the fork assembly between the first position and the second position.

In yet a further aspect, the invention provides a method of lifting a fork assembly. The fork assembly is mounted to a truck body using a master cylinder having a supply chamber and a slave chamber that is connected between the truck and a proximal end of a fork. The master cylinder is moveable between a lowered position and a raised position. A slave cylinder is connected between the fork and a fork trail assembly. The slave cylinder is moveable between a retracted position and an extended position. The slave cylinder is in fluid communication with the master cylinder. The method comprises the steps of providing a fluid under pressure to the supply chamber of the master cylinder to raise the fork assembly, and directing a second fluid from the slave chamber of the master cylinder to the slave cylinder to extend the fork trail assembly.

These and still other aspects of the present invention will be apparent from the description that follows. In the detailed description, a preferred example embodiment of the invention will be described with reference to the accompanying drawings. This embodiment does not represent the full scope of the invention; rather the invention may be employed in other embodiments. Reference should therefore be made to the claims herein for interpreting the breadth of the invention.

### BRIEF DESCRIPTION OF THE DRAWINGS

FIG. 1 is a side isometric view of a material handling vehicle incorporating the present invention;

FIG. 2 is a partial isometric view of the material handling vehicle of FIG. 1 showing a portion of the fork assembly;

FIG. 3 is a partial side view of the material handling vehicle of FIG. 1 showing the fork assembly in the raised position;

FIG. 4 is a partial side view of the material handling vehicle of FIG. 1 showing the fork assembly in the lowered position;

FIG. 5 is a schematic showing another example fork assembly lift mechanism;

FIG. 6 is a schematic showing a further example fork assembly lift mechanism; and

FIG. 7 is a simplified schematic showing an example fork assembly lift mechanism encountering an obstacle.

### DETAILED DESCRIPTION OF THE PREFERRED EXAMPLE EMBODIMENT

The preferred example embodiment will be described in relation to a battery powered pallet truck; however, the present invention is equally applicable to other types and styles of powered and non-powered material handling vehicles, including gas powered counterbalance trucks and the like.

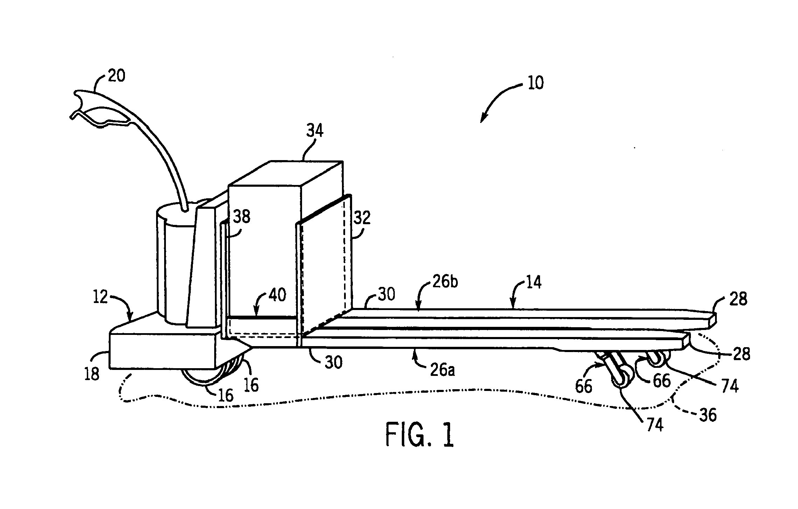

A material handling vehicle 10, in accordance with an example embodiment of the present invention, is generally shown in FIG. 1. The vehicle 10 generally includes a truck body 12, or tractor, and a fork assembly 14 mounted to the truck body 12. The truck body 12 includes a pair of drive wheels 16 mounted beneath a base 18. A control handle 20 extends upwardly from the truck body 12 and is used to control the speed and direction of the vehicle 10 in combination with a traction motor (not shown). Various other material handling vehicle 10 configurations and constructions are contemplated as being adaptable for use with the present invention and will be appreciated by one skilled in the art.

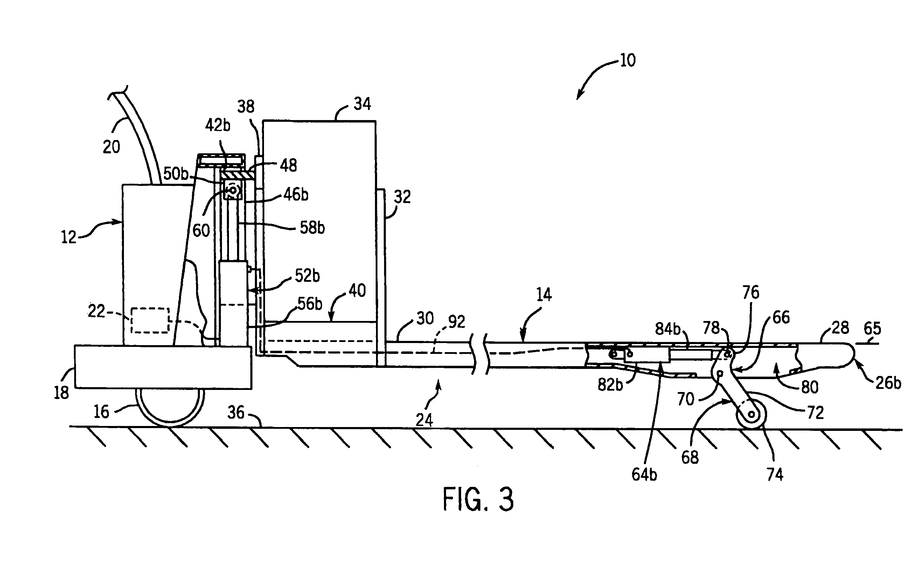

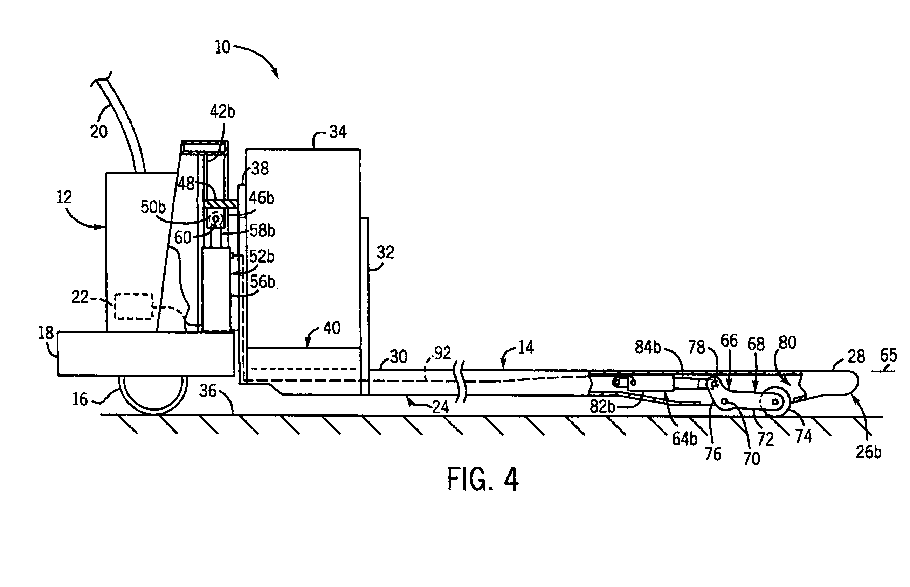

The fork assembly 14 is vertically moveable between a lowered position for slipping under a load (shown most clearly in FIG. 4) and a raised position for lifting the load (shown most clearly in FIG. 3). A fluid supply system 22 is preferably housed within the truck body 12 and ultimately directs a pressurized fluid, such as hydraulic fluid, to actuate a fork assembly lift mechanism 24 that helps raise and lower the fork assembly 14. Various other working fluids may be used, for example, the fluid supply system 22 may incorporate compressed air to drive pneumatic pistons; however, substantially incompressible fluids are preferred.

In the example embodiment, the fork assembly 14 includes a pair of forks 26a, 26b, each fork having a distal fork end 28 and a proximal fork end 30 that is adjacent the truck body 12. A load plate 32 provides a stop between loads (not shown) placed on the forks 26a, 26b and a battery 34. The battery 34 is shown located on the fork assembly 14; however, the battery 34 may be located on the truck body 12. Notably, when the battery 34 is coupled to the fork assembly 14, the low-profile of the forks 26a, 26b, due to the elimination of traditional pull bars by the fork assembly lift mechanism 24, allows the battery 34 to be oriented closer to the floor 36, in both the raised and lowered positions. As a result, the center of gravity of the material handling vehicle 10 is lowered.

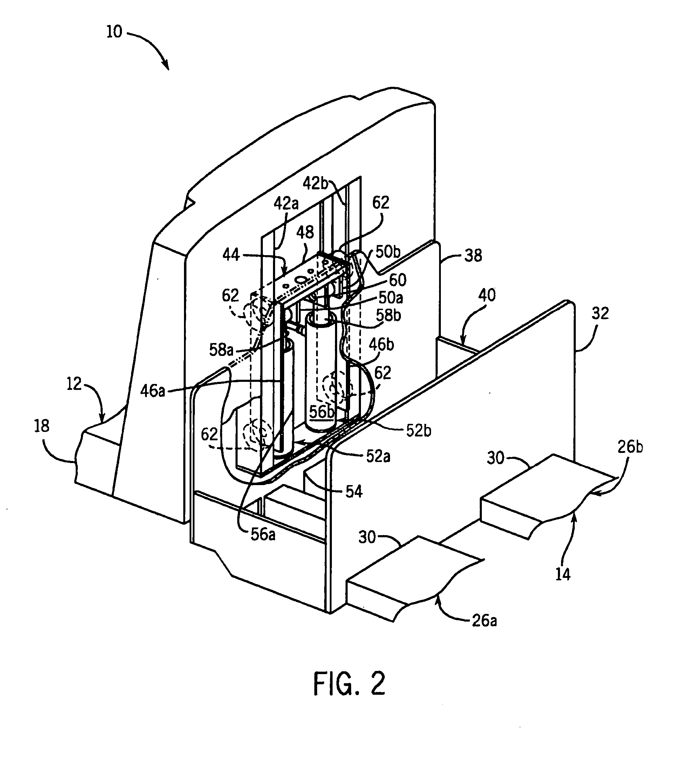

The overall coupling of the fork assembly 14 to the truck body 12 is best shown in FIG. 2. The proximal fork ends 30 terminate in a fork plate 38 that defines one end of a battery box 40 for securing the battery 34 (removed from FIG. 2 for clarity). The forks 26a, 26b are securely coupled to the fork plate 38, such as by welding, so that the forks 26a, 26b and fork plate 38 move substantially in unison. A pair of C-shaped channels 42a, 42b are spaced apart and secured substantially vertically to the truck body 12. The channels 42a, 42b are used to guide a carriage 44 as the fork assembly is raised and lowered. The carriage 44 includes a pair of spaced side rails 46a, 46b that are coupled proximate the upper ends by an equalizer link 48. The equalizer link 48 has a pair of downward opening shackles 50a, 50b configured to engage a pair of master cylinders 52a, 52b.

The stationary portions 56a, 56b (i.e., chambers) of the master cylinders 52a, 52b are preferably attached to the truck body 12 by securely coupling (e.g., by welding, bolting, and the like) the master cylinders 52a, 52b to a horizontal mounting base 54. The moveable portions 58a, 58b (i.e., piston rods) are secured by pivot pins 60 to the respective shackles 50a, 50b. As a result, when the master cylinders 52a, 52b are actuated, carriage 44 and thus the coupled fork assembly 14 are raised. To facilitate the motion of the fork assembly 14, rollers 62 are rotatably mounted to the side rails 46a, 46b of the carriage 44, thus, the rollers 62 are captured by the channels 42a, 42b and allowed to translate essentially along the channels 42a, 42b during operation of the fork assembly 14. While the example embodiment illustrates the stationary chamber being coupled to the mounting base 54, the master cylinders 52a, 52b may be inverted such that the moveable portion 58a, 58b is secured to the mounting base 54.

One skilled in the art will appreciate the variety of configurations available to construct and couple the fork assembly 14 to the truck body 12. For example, each fork 26a, 26b may be directly coupled to only one of the master cylinders 52a, 52b such that the height of each fork 26a, 26b may be adjusted by one of the master cylinders 52a, 52b. The equalizer link 48, however, preferably links the movement of the master cylinders 52a, 52b to improve the uniform operation of the fork assembly lift mechanism 24.

With additional reference to FIGS. 3 and 4, the configuration and basic operation of the fork assembly lift mechanism 24 is described. The fork assembly 14 is adjusted between a first position and a second position by the combination of the master cyl inders 52a, 52b raising and lowering the proximal fork ends 30 and a pair of slave cylinders 64a, 64b that actuate the fork trail assemblies 66 to raise and lower the distal fork ends 28. The fork assembly 14 is shown in the lowered position with the fork trail assembly 66 in the retracted position in FIG. 4. The fork assembly 14 is shown in the raised position with the fork trail assembly 66 in the extended position in FIG. 3. For clarity, FIGS. 3 and 4 are simplified and only show a portion of the fork assembly 14 and the fork assembly lift mechanism 24 as viewed along a longitudinal plane, as the example embodiment is substantially symmetric about the longitudinal plane.

Each fork trail assembly 66 includes a bell crank 68 that is pivotally connected to the respective fork 26a, 26b by a fork trail pivot pin 70. The bell crank 68 has a wheel leg 72 having a load wheel 74 rotatably attached at its end. The load wheel 74 is used to engage the floor 36. The bell crank 68 also includes a piston leg 76 that is rotatably coupled to the respective slave cylinder 64a, 64b by a bell pin 78, or any other suitable structure. The fork trail assembly 66 is housed substantially within a cavity 80 formed near the distal fork ends 28 of the forks 26a, 26b. One skilled in the art will appreciate the many fork trail assembly 66 variations available.

The slave cylinders 64a, 64b are housed substantially longitudinally within the respective fork 26a, 26b along a longitudinal fork axis 65. The stationary portions 82a, 82b (i.e., chambers) are pivotally coupled to the respective forks 26a, 26b to allow the slave cylinders 64a, 64b to tilt as the slave cylinders 64a, 64b are actuated to extend and retract the fork trail assemblies 66. The moveable portions 84a, 84b (i.e., piston rods) are secured by the bell pin 78 to the piston leg 76 of the bell crank 68. As a result, actuation of the slave cylinders 64a, 64b causes rotation of the bell cranks 68 about the fork trail pivot pins 70, ultimately extending and retracting the fork trail assemblies 66 helping to raise and lower the fork assembly 14. It is of note that stationary portion 82a and moveable portion 84a are not shown, but are substantially identical to the stationary portion 82b and moveable portion 84b shown in FIGS. 3 and 4 with respect to the fork 26b.

The configuration of the fork trail assembly 66 and use of the slave cylinders 64a. 64b allow for the forks 26a, 26b to be made of rectangular tube. As a result, the strength, rigidity, and dimensional accuracy are greatly improved over conventional fork designs that rely on extensive secondary machining operations. Furthermore, the slave cylinders 64a, 64b may be aligned substantially longitudinally within the forks 26a, 26b, allowing for increased capacity slave cylinders 64a, 64b, and hence, increased capacity fork trail assemblies 66.

In general, to move the fork assembly 14 of the example embodiment from the lowered position shown in FIG. 4 to the raised position shown in FIG. 3, the fluid supply system 22 directs a pressurized fluid to the master cylinders 52a, 52b. This pressurized fluid actuates the master cylinders 52a, 52b urging the coupled carriage 44 and fork assembly 14 toward the raised position. Additionally, a second fluid is directed from the master cylinders 52a, 52b toward the slave cylinders 64a, 64b to actuate and extend the fork trail assembly 66, thereby urging the fork assembly 14 toward the raised position.

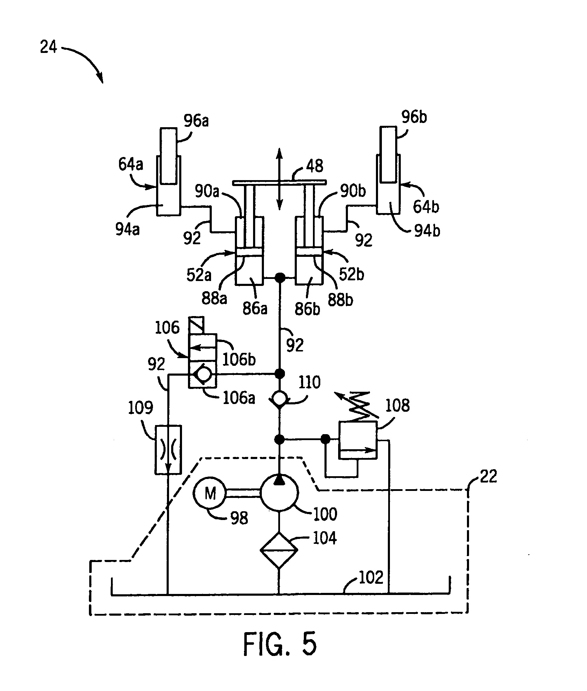

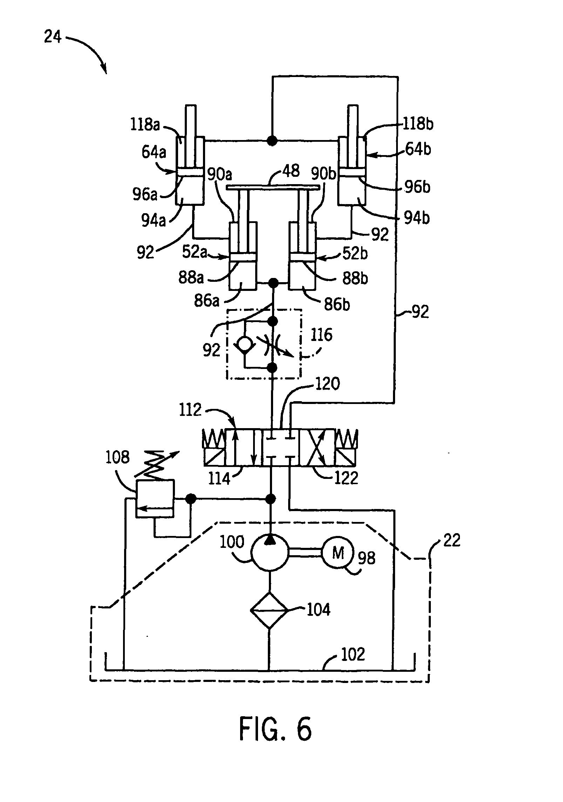

More specifically, and with reference to FIG. 5, the pressurized fluid from the fluid supply system 22 is directed into respective master supply chambers 86a, 86b whereat master pistons 88a, 88b are actuated. As the volume of the master supply chambers 86a, 86b increases, the volume of the opposing slave chambers 90a, 90b is decreased causing a second fluid to be forced from the slave chambers 90a, 90b though conduits 92 to the respective master chambers 94a, 94b of the slave cylinders 64a, 64b. As the volume defining the master chambers 94a, 94b increases, the slave pistons 96a, 96b are actuated to pivot the bell crank 68 and thereby extend the fork trail assemblies 66 to raise the fork assembly 14 in cooperation with the master cylinders 52a, 52b (shown in FIG. 6).

To lower the fork assembly 14 from the raised position to the lowered position, the fluid supply system 22 ceases to provide pressurized fluid to the master cylinders 52a, 52b. In the example shown in FIGS. 3-5, the weight of the fork assembly 14 alone, or combined with the weight of any product being transferred by the material handling vehicle 10, is sufficient to direct the fluid out of the master chamber 94a, 94b of the slave cylinders 64a, 64b and back toward the slave chambers 90a, 90b of the master cylinders 52a, 52b. Additionally, the pressurized fluid in the master supply chambers 86a, 86b is directed back toward the fluid supply system 22. This generally describes a fork assembly lift mechanism 24 incorporating double-acting master cylinders 52a, 52b and single-acting slave cylinders 64a, 64b; however, the invention contemplates numerous variations, including the use of double-acting slave cylinders 64a, 64b.

A simplified schematic of one example fork assembly lift mechanism 24 is illustrated in FIG. 5 incorporating a pair of master cylinders 52a, 52b and a pair of single-acting slave cylinders 64a, 64b. Under normal operation, the fork assembly 14 is raised from the lowered position by energizing a motor 98 of the fluid supply system 22 to drive a fluid pump 100. The pump 100 draws fluid (e.g., hydraulic fluid) from a reservoir 102 through a filter 104 to remove any contaminates (e.g., metal filings) from the fluid. The pressurized fluid is then directed toward the master cylinders 52a, 52b via a series of conduits 92. The fluid passes through a one-way check valve 110 that prevents the fluid from flowing back through the pump 100 should the pump 100 fail or be de-energized. The fluid is directed into the master supply chambers 86a, 86b where it actuates the master pistons 88a, 88b. The master pistons 88a, 88b are preferably rigidly coupled by the equalizer link 48, fork plate 38, and the like, to ensure that the resistive force of the fork assembly 14 is substantially evenly distributed between the master cylinders 52a, 52b.

As the master pistons 88a, 88b actuate, the volumes of the slave chambers 90a, 90b are reduced. A second fluid (e.g., hydraulic fluid) is captured partially within the slave chambers 90a, 90b and is thus directed from the slave chambers 90a, 90b of the master cylinders 52a, 52b into the master chambers 94a, 94b of the respective slave cylinders 64a, 64b. The slave cylinders 64a, 64b, being shown as single-action, are actuated or extended by the fluid entering the master chambers 94a, 94b. Thus, by actuating the master cylinders 52a, 52b, the slave cylinders 64a, 64b are substantially simultaneously actuated due to the preferably incompressible nature of fluids used in the fork assembly lift mechanism 24.

Should the pressure in the conduit 92 exceed a predetermined amount during pumping, a relief valve 108 is triggered providing a fluid path to the reservoir 102, thus preventing damage to the pump 100 and the associated components. Additionally, although not shown, another conduit may be in fluid communication with the slave cylinders 64a, 64b to direct fluid that has leaked past the slave pistons 96a, 96b back to the reservoir 102, as opposed to allowing it to leak onto the floor 36.

The position of the fork assembly 14 may be maintained at any location, including the raised and lowered positions or anywhere between the fully lowered and fully raised positions shown in FIGS. 4 and 3, respectively. In the example embodiment, the motor 98 is de-energized to maintain a particular fork assembly 14 position. The weight of the fork assembly 14 and any load thereon urges the fluid in the master cylinders 52a, 52b and slave cylinders 64a, 64b toward the reservoir 102 and slave chambers 90a, 90b, respectively. The fluid attempts to flow from the master chambers 94a, 94b of the slave cylinders 64a, 64b toward the slave chambers 90a, 90b of the master cylinders 52a, 52b, however, as the fluid pressure builds against the master pistons 88a, 88b in an attempt to reduce the volume of the master supply chambers 86a, 86b, a one-way check valve 106a of the directional control valve 106 and an in-line one-way check valve 110 are used to maintain the position of the fork assembly 14. The one-way check valve 106a prevents the fluid from flowing to the reservoir 102 and the in-line one-way check valve 110 prevents the fluid from flowing back thorough the pump 100 toward the reservoir 102, thus resulting in the position of the fork assembly 14 to be maintained. One skilled in the art will appreciate the various other techniques to control the actuation and position of the fork assembly 14, each of which is equally applicable to the present invention. For example, an electronically controlled valve may combine the functions of the directional control valve 106 and the in-line one-way check valve 110 to monitor the pressure in the conduit 92 and ensure the desired flow of fluid in response to the input of an operator.

To lower the fork assembly 14 with the fork assembly lift mechanism 24 of the example embodiment illustrated in FIG. 5, the directional control valve 106 is used. The directional control valve 106 includes a pass through 106b that can be aligned to allow the pressurized fluid to flow through the conduit 92 toward the reservoir 102. The fluid preferably flows through a flow regulator 109 to regulate the descent of the fork assembly 14. A variable flow regulator may be used to allow the rate of descent to be controlled and adjusted as the application requires.

As the fluid drains from the master supply chambers 86a, 86b, the weight of the fork assembly 14 and product forces the fork trail assembly 66 to retract, thereby directing fluid back to the slave chambers 90a, 90b of the master cylinders 52a, 52b. As a result, the fluid flowing between the slave chambers 90a, 90b of the master cylinders 52a, 52b and the master chambers 94a, 94b of the slave cylinders 64a, 64b preferably establishes a closed system that is not provided pressurized fluid from the reservoir. Again, the non-pressurized portion of the slave cylinders 64a, 64b may be in fluid communication with the reservoir 102 to direct any leaked fluid to the reservoir 102, thus preventing any fluid leaking onto the floor 36.

An alternative fork assembly lift mechanism 24 schematic is shown in FIG. 6 that includes double-acting slave cylinders 64a, 64b and a three-way directional control valve 112. To raise the fork assembly 14 (i.e., actuate the master cylinders 52a, 52b to apply force near the proximal fork ends 30 and actuate the slave cylinders 64a, 64b to extend the fork trail assembly 66 to apply force near the distal fork ends 28) the directional control valve 112 is shifted to the right to align the lifting valve 114. In the lifting state, pressurized fluid flows through the hydraulic throttle check valve 116 and into the master supply chambers 86a, 86b of the master cylinders 52a, 52b, respectively. The actuation of the master cylinders 52a, 52b again causes actuation of the slave cylinders 64a, 64b as fluid flows from the slave chambers 90a, 90b of the master cylinders 52a, 52b to the master chambers 94a, 94b of the slave cylinders 64a, 64b. Differing from the embodiment described in FIG. 5, the slave cylinders 64a, 64b include slave supply chambers 118a, 118b that are in selective fluid communication with the reservoir 102 to allow fluid to drain to the reservoir 102 from the slave supply chambers 118a, 118b.

To maintain the position of the fork assembly 14, the directional control valve 112 is placed as shown in FIG. 6 with the holding valve 120 aligned. As the weight of the fork assembly 14 and product urges the fork assembly toward the lowered/retracted position, the directional control valve 112 prevents the fork assembly 14 from changing position. The motor 98 and pump 100 are preferably de-energized when the fork assembly 14 is being held at a constant position, however, a relief valve 108 is again included to prevent damage to the components if they remain energized or encounter a load that exceeds the rated capacity.

Shifting the directional control valve 112 to the left, the lowering valve 122 is aligned. In this state, the pump 100 provides pressurized fluid from the reservoir 102 into the slave supply chambers 118a, 118b of the slave cylinders 64a, 64b to urge the fluid captured between the master chambers 94a, 94b of the slave cylinders 64a, 64b and the slave chambers 90a, 90b of the master cylinders 52a, 52b back toward the master cylinders 52a, 52b. The fluid exiting the master supply chambers 86a, 86b is directed through the hydraulic throttle check valve 116 where the flow is regulated to again control the descent of the fork assembly 14. As a result, the fork trail assembly 66 is retracted and the master cylinders 52a, 52b are lowered. Again, actuation of the master cylinders 52a, 52b results in actuation of the slave cylinders 64a, 64b.

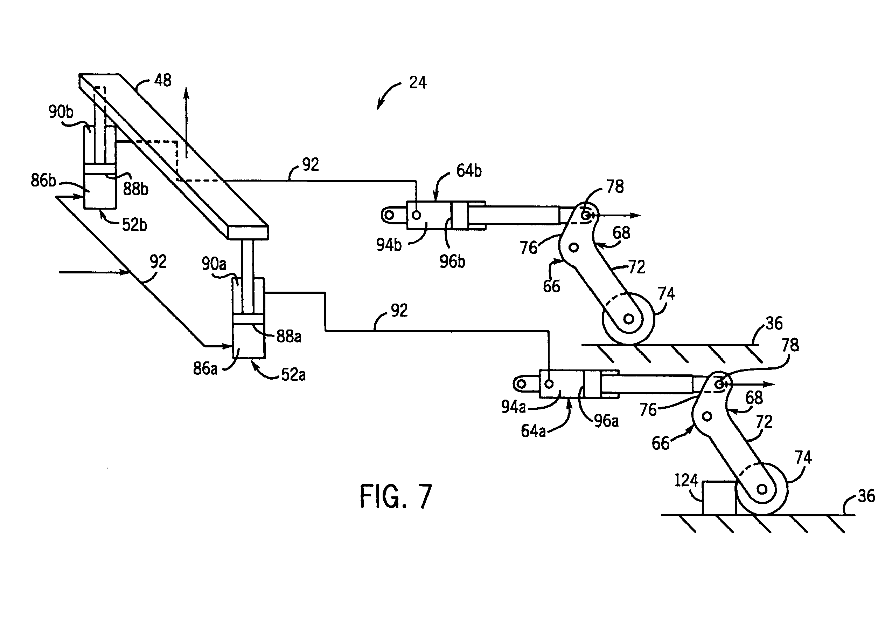

A further aspect of the present invention is illustrated in FIG. 7. When one of the load wheels 74 encounters a barrier or object 124, the fluid pressure in the master chamber 94a of the slave cylinder 64a increases. As a result, the pressure in the conduit 92 between the slave cylinder 64a and the master cylinder 52a also increases. This increase is in turn reflected by additional pressure in the slave chamber 90a, causing an increase in the pressure in the master supply chamber 86a. The increase in pressure is ultimately transferred to the other hydraulically coupled master supply chamber 86b, motor 98, and pump 100 as the master cylinders 52a, 52b are rigidly linked by the equalizer link 48 and/or fork plate 38. As a result, the pressure differential between the master cylinders 52a, 52b is substantially minimized. If the pressure increase exceeds a predetermined level, the relief valve 108 will prevent damage to the components, including the motor 98, pump 100, conduits 92, slave cylinders 64a, 64b, and master cylinders 52a, 52b. As a result, the fork trail assemblies 66 are both fluidly linked and mechanically linked to help ensure that the fork trail assemblies 66 operate substantially in unison. This also prevents substantial side-to-side tilting of the fork assembly 14. The fork assembly lift mechanism 24 of the present invention also operates to help maintain a parallel orientation between the floor 36 and the fork assembly 14.

While the example embodiment has been described having a pair of master cylinders 52a, 52b and a pair of slave cylinders 64a, 64b, one of ordinary skill in the art will appreciate the numerous variations that are within the scope of the present invention. For example, use of a single master cylinder to supply a pair of slave cylinders is an alternative construction contemplated by the present invention.

The capacity and operational characteristics of the fluid supply system 22 are dependent upon many application specific factors. For example, the pressure of the fluid can vary depending on the maximum rated capacity of the material handling vehicle 10, the number of pistons used, the available fluid pressure area within the pistons, the capabilities of any fluid pressure pump (e.g., hydraulic pump) used, and a variety of similar consideration. One of ordinary skill in the art is capable of determining the appropriate parameters for each application.

While there has been shown and described what is at present considered the preferred embodiment of the invention, it will be obvious to those skilled in the art that various changes and modifications can be made therein without departing from the scope of the invention defined by the following claims.

## Claims

1. A fork assembly lift mechanism configurable for use in a material handling vehicle having a truck body and a fork assembly coupled to the truck body that is moveable between a lowered position and a raised position, the fork assembly including a fork trail assembly movable between a retracted position and an extended position, the fork assembly lift mechanism comprising:
a master cylinder coupled to the truck body and the fork assembly for moving the fork assembly between the lowered position and the raised position; and
a slave cylinder coupled to the fork assembly and the fork trail assembly for moving the fork trail assembly between the retracted position and the extended position;
wherein the slave cylinder is in fluid communication with the master cylinder such that actuation of the master cylinder results in actuation of the slave cylinder to move the fork assembly between the lowered position and the raised position and to move the fork trail assembly between the retracted position and the extended position.

2. The fork assembly lift mechanism of claim 1, wherein the master cylinder includes a piston defining a supply chamber and a slave chamber in fluid communication with the slave cylinder, such that directing a fluid medium into the supply chamber results in a second fluid medium being directed out of the slave chamber and into the slave cylinder to move the fork trail assembly between the retracted position and the extended position.

3. The fork assembly lift mechanism of claim 1, wherein the slave cylinder includes a piston defining a supply chamber and a master chamber in fluid communication with the master cylinder, such that directing a fluid medium into the supply chamber results in a second fluid medium being directed out of the master chamber and into the master cylinder to move the fork assembly between the raised position and the lowered position.

4. The fork assembly lift mechanism of claim 1, further comprising:
a second slave cylinder coupled to the fork assembly and a second fork trail assembly, and in fluid communication with the master cylinder for moving the second fork trail assembly between the retracted position and the extended position;
wherein the second slave cylinder is in fluid communication with the master cylinder such that actuation of the master cylinder results in actuation of the second slave cylinder.

5. The fork assembly lift mechanism of claim 1, further comprising:
a second master cylinder coupled to the truck body and the fork assembly for moving the fork assembly between the lowered position and the raised position;
and
a second slave cylinder coupled to the fork assembly and the fork trail assembly, and in fluid communication with the second master cylinder for moving the fork trail assembly between the retracted position and the extended position;
wherein the second slave cylinder is in fluid communication with the second master cylinder such that actuation of the second master cylinder results in actuation of the second slave cylinder.

6. The fork assembly lift mechanism of claim 5, wherein the master cylinder and the second master cylinder are operationally coupled such that actuation the master cylinder and the second master cylinder is essentially in unison.

7. The fork assembly lift mechanism of claim 6, wherein:
the master cylinder includes a piston defining a supply chamber; and
the second master cylinder includes a second piston defining a second supply chamber;
wherein the supply chamber and the second supply chamber are in fluid communication to minimize a pressure differential between the supply chamber and the second supply chamber.

8. The fork assembly lift mechanism of claim 1, wherein:
the fork assembly defines a cavity and the slave cylinder is housed within the cavity; and
the slave cylinder is aligned longitudinally with respect to the fork assembly.

9. The fork assembly lift mechanism of claim 1, wherein:
actuation of the master cylinder and slave cylinder alters the vertical location of the fork assembly with respect to a floor area supporting the material handling vehicle; and
orientation of the fork assembly with respect to the floor area remains essentially consistent.

10. A material handling vehicle comprising:
a tractor capable of supplying a pressurized fluid;
a fork assembly coupled to the tractor moveable between a first position and a second position;
at least a first fork included in the fork assembly having a distal fork end opposite a proximal fork end proximate the tractor;
a fork trail assembly proximate the distal fork end of the at least first fork;
at least a first master cylinder coupled to the tractor and the fork assembly, and in selective communication with the pressurized fluid; and
at least a first slave cylinder coupled to the at least first fork and the fork trail assembly;
wherein the at least first master cylinder and the at least first slave cylinder are in fluid communication such that actuation of the at least first master cylinder by the pressurized fluid actuates the at least first slave cylinder to move the fork assembly between the first position and the second position.

11. The material handling vehicle of claim 10, wherein the at least first master cylinder includes a piston defining a supply chamber in fluid communication with the pressurized fluid and a slave chamber in fluid communication with the at least first slave cylinder, such that directing the pressurized fluid into the supply chamber results in a fluid medium being directed out of the slave chamber and into the at least first slave cylinder to actuate the at least first slave cylinder and move the fork assembly between the first position and the second position.

12. The material handling vehicle of claim 10, wherein:
the at least first fork defines a cavity and the at least first slave cylinder is housed within the cavity; and
the at least first slave cylinder is aligned longitudinally between the distal fork end and the proximal fork end.

13. The material handling vehicle of claim 10, wherein the master cylinder includes a piston defining a supply chamber and a slave chamber in fluid communication with the slave cylinder, such that directing the pressurized fluid into the supply chamber results in a fluid medium being directed out of the slave chamber and into the slave cylinder to move the fork assembly between the first position and the second position.

14. A method of lifting a fork assembly mounted to a truck body using a master cylinder having a supply chamber and a slave chamber connected between the truck and a proximal end of a fork moveable between a lowered position and a raised position, and a slave cylinder connected between the fork and a fork trail assembly moveable between a retracted position and an extended position, and
wherein the slave cylinder is in fluid communication with the master cylinder, the method comprising the steps of:
providing a fluid under pressure to the supply chamber of the master cylinder to raise the fork assembly; and
directing a second fluid from the slave chamber of the master cylinder to the slave cylinder to extend the fork trail assembly.

15. The method of claim 14, further comprising the steps of:
placing the supply chamber of the master cylinder in fluid communication with a fluid reservoir to lower the fork assembly and retract the fork trail assembly; and
providing the slave cylinder the fluid under pressure to lower the fork assembly.
